# EUROPÄISCHE PATENTSCHRIFT

(11) **EP 3 527 954 B1**
(45) Veröffentlichungstag und Bekanntmachung des Hinweises auf die Patenterteilung: **30.03.2022**
(21) Anmeldenummer: 18157281.9
(22) Anmeldetag: 16.02.2018
(51) Int. Cl.: G01D 11/30, E05F 15/43, E05F 15/73

(54) **TÜRSENSOR MIT DREHWINKELGEBER**
DOOR SENSOR WITH AN ANGULAR POSITION DETECTOR
CAPTEUR DE PORTE À DÉTECTEUR D'ANGLE DE ROTATION

(43) Veröffentlichungstag der Anmeldung: 21.08.2019
(73) Patentinhaber: Cedes AG, 7302 Landquart (CH)
(72) Erfinder: WALSER, Simon, 7203 Trimmis (CH)
(74) Vertreter: Otten, Roth, Dobler & Partner mbB Patentanwälte

(56) Entgegenhaltungen:
- WO-A1-2012/071664
- DE-A1-102009 024 601
- DE-B3-102007 038 421
- GB-A- 2 498 315
- US-A1- 2004 140 782
- US-A1- 2012 127 317

## Beschreibung

Die Erfindung betrifft einen auf dem Türblatt mitfahrenden Türsensor mit Drehwinkelgeber.

Aus dem Stand der Technik sind Türsensoren bekannt, die auf dem Türblatt einer Schwenktüre montiert sind. Die Patente EP 2 453 254 A1, EP 2 453 260 B1, EP 2 698 649 B1, EP 2 453 252 B1 und EP 2 667 218 B1 des Anmelders beschreiben einen gattungsgemässen Sensor.

US 2012/127317 A1 offenbart einen Türsensor mit einem Bildsensor, der in Bezug auf eine Montagebene geneigt montiert werden kann.

GB2498315 A, DE102007038421 B3, US 2004/140782 A1, DE102009024601 A1 und WO2012/071664 A1 offenbaren weitere bekannte Türsensoren.

Es ist Aufgabe der Erfindung, einen verbesserten Türsensor bereit zu stellen.

Diese Aufgabe wird, ausgehend von einem Türsensor der eingangs genannten Art, durch eine Tür nach Anspruch 1 gelöst.

Vorteilhafte Ausgestaltungen sind in den weiteren abhängigen Ansprüchen angegeben.

Die erfindungsgemässe Tür weist ein Türblatt auf, sowie einen Türsensor zur Montage auf dem Türblatt einer Schwenk- oder Drehtüre mit einem 3D Bildsensor zur Überwachung eines Uberwachungsfeldes vor dem Türblatt und mit einem Drehwinkelgeber zur Detektion des Drehwinkels des Türblatts, wobei der Türsensor einen gemeinsamen Träger aufweist, welcher den 3D Bildsensor mit dem Drehwinkelgeber verbindet.

Die erfindungsgemässe Tür kann den Vorteil ausbilden, dass der Türsensor zur Verarbeitung des Drehwinkels des Türblatts mit dem Türsensor keine Eingabe von aussen benötigt. Daher kann er auch mit einfachen und preiswerten Türsteuerungen verwendet werden.

Erfindungsgemäß ist der Drehwinkelgeber ein mindestens 2-Achsen Drehwinkelgeber. Dies kann den Vorteil ausbilden, dass der Türsensor seine Montagesituation erkennen kann.

Vorzugsweise ist der Drehwinkelgeber ein Gyrosensor. Dies kann den Vorteil ausbilden, dass der Türsensor preiswert und klein ausgeführt werden kann.

Erfindungsgemäß definiert der gemeinsame Träger eine Montageebene zur Montage am Türblatt und der Drehwinkelgeber ist in Bezug auf die Montageebene geneigt angeordnet und insbesondere um 15° geneigt angeordnet, wobei dies den Vorteil ausbilden kann, dass der Gyrosensor innerhalb des Türsensors nach den Hauptachsen des Türsensors ausgerichtet werden kann, und/oder der gemeinsame Träger umfasst eine Kante oder Markierung zur waagrechten und/oder senkrechten Ausrichtung des Trägers am Türblatt, und der Drehwinkelgeber ist in Bezug auf die Kante oder Markierung geneigt angeordnet und insbesondere um 30° geneigt angeordnet, wobei dies den Vorteil ausbilden kann, dass der Gyrosensor innerhalb des Türsensors nach den Hauptachsen des Türsensors ausgerichtet werden kann.

Vorzugsweise weist der gemeinsame Träger eine Montageplatte zur positionsstabilen Aufnahme des 3D Bildsensors und des Drehwinkelgebers auf welche eine Ebene zur Montage am Türblatt aufweist und/oder welche einer Kante oder einer Markierung umfasst die dazu vorgesehen ist, in waagrechter und/oder senkrechter Ausrichtung auf dem Türblatt angeordnet zu werden, wobei der Drehwinkelgeber in Bezug auf zwei senkrechte Achsen in der Montageebene, insbesondere die Hauptachsen des Türblatts 1-fach oder 2-fach geneigt angeordnet ist. Dies kann den Vorteil ausbilden, dass Montage und Ausrichtung des Türsensors samt Gyrosensor in Bezug auf das Türblatt einfach und präzise erfolgen kann.

Vorzugsweise weist der Türsensor eine vorbestimmte Seite zur Montage in Richtung des Türblatts auf. Dies kann den Vorteil ausbilden, dass die verdrehungssichere Montage einfach und zuverlässig erfolgen kann.

Vorzugsweise ist der Drehwinkelgeber ein 3-Achsen Drehwinkelgeber, insbesondere ein 3-Achsen Gyrosensor. Dies kann den Vorteil ausbilden, dass ein handelsüblicher und damit preiswerter Gyrosensor verwendet werden kann.

Vorzugsweise weist der Türsensor einen Speicher zur Speicherung von Umgebungsparametern auf, insbesondere der Türseite (Türinnenseite oder Türaussenseite), der Drehrichtung (links- oder rechtsdrehende Türe) und des maximalen Drehwinkels des Türblatts. Dies kann den Vorteil aufweisen, das dem Türsensor Umgebungsvariablen eingelernt werden kann.

Weitere Merkmale der Erfindung sind in den Zeichnungen und der Zusammenfassung angegeben, wobei die Erfindung durch die Ansprüche definiert wird. Die jeweils genannten Vorteile können sich auch für Merkmalskombinationen realisieren in deren Zusammenhang sie nicht genannt sind.

### Überblick über die Zeichnungen:

Ein Ausführungsbeispiel der Erfindung ist in den Zeichnungen dargestellt. Alle Zeichnungen betreffen den selben erfindungsgemässen Türsensor in gleicher Anordnung am Türblatt, falls nicht ausdrücklich anders dargelegt. Gleiche Bezugszeichen in den einzelnen Figuren bezeichnen dabei einander entsprechende Elemente. Es zeigen:
- Fig. 1: Türe mit Türsensor in 3D Ansicht
- Fig. 2: Türe mit Türsensor in Draufsicht
- Fig. 3: Türsensor mit Gehäuse
- Fig. 4: Montageplatte des Türsensors
- Fig. 5: Türsensor auf Montageplatte
- Fig. 6: Türsensor auf Montageplatte
- Fig. 7: Ausrichtung des Türsensors
- Fig. 8: Montagesituationen
- Fig. 9: Überwachungsfeld einer geschlossenen Türe
- Fig. 10: Überwachungsfeld einer geöffneten Türe
- Fig. 11: Hinteres Überwachungsfeld bei geschlossener Türe
- Fig. 12: Hinteres Überwachungsfeld bei leicht geöffneter Türe
- Fig. 13: Hinteres Überwachungsfeld bei weiter geöffneter Türe

### Detaillierte Beschreibung der Zeichnungen:

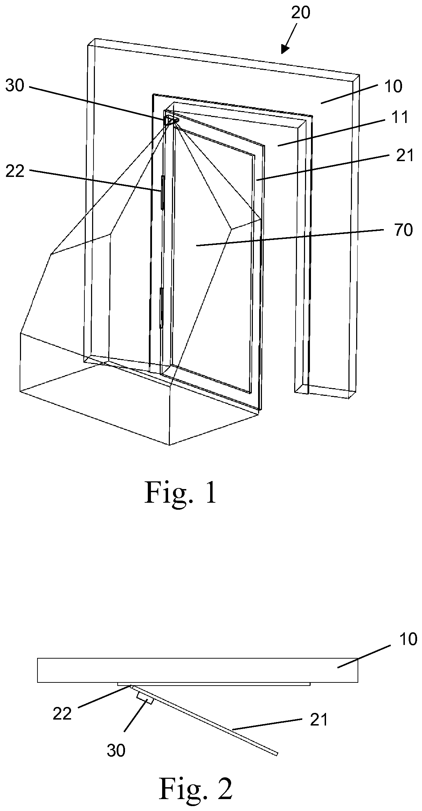

Fig. 1 zeigt eine Türe 20 mit dem Türsensor 30 in 3D Ansicht.

Die Türe 20 weist ein Türblatt 21 auf welches mit Türscharnieren 22 drehbar an der Wand 10 befestigt ist. Das Türblatt kann geschlossen werden oder in eine Richtung, hier in Richtung des Betrachters, geöffnet werden, sodass das Türblatt die Türöffnung 11 frei gibt.

Das Türscharnier 20 legt die Drehachse des Türblatts fest. Die Drehachse ist die Achse um die das Türblatt um einen bestimmten Drehwinkel bewegt werden kann. Bei geschlossener Türe wird der Drehwinkel Null angenommen. Bei maximal geöffneter Türe ist die Türe im maximalen Drehwinkel geöffnet.

Die Türe 20 ist eine Schwenktüre, die in nur eine Richtung zu öffnen ist.

Die Türe und das Türblatt weisen zwei Türseiten auf. Die erste Türseite ist die Türinnenseite, das ist die Seite, in deren Richtung die Tür geöffnet wird. Die zweite Türseite ist die Türaussenseite, das ist die Seite in deren Richtung die Türe geschlossen wird.

Eine Türe kann eine von zwei Drehrichtungen aufweisen. Die Drehrichtung einer Türe ist die Seite an welcher die Drehachse der Türe auf der Türinnenseite ist. Die Drehrichtung kann rechtsdrehend oder linksdrehend sein. Die Türe 20 hat die Drehachse auf der linken Seite und daher die linksdrehend.

Auf dem Türblatt 21 ist auf der Türinnenseite oben auf der Seite der Drehachse auf dem Türblatt mit sehr geringem Abstand (kleiner 20 cm oder kleiner 10% der Breite bzw. Höhe des Türblatts) zum oberen und seitlichen Abschluss des Türblatts der Türsensor 30 montiert. Der Türsensor 30 überwacht das dreidimensionale Überwachungsfeld 70. Der so montierte Türsensor wird als auf dem Türblatt mitfahrend bezeichnet. Ebenso ist das Überwachungsfeld 70 mit dem Türblatt mitfahrend. Das heisst, das Überwachungsfeld kann mindestens teilweise konstant zum Türblatt sein. Die Figur zeigt eine realistische Darstellung der möglichen Ausdehnung des Überwachungsfeldes.

Die Türe 20 ist eine über eine Türsteuerung motorisch angetriebene Türe und der Türsensor ist dazu ausgelegt, in Abhängigkeit von seiner Detektion im Überwachungsfeld Signale an die Türsteuerung zu übergeben. Dies kann ein Sicherheitssignal zum Stopp der Türe sein, etwa falls eine Person im Überwachungsfeld im Bewegungsfeld des Türblatts detektiert wird. Dies kann auch ein Öffnungssignal zum Öffnen der Türe sein, etwa falls eine Person im Überwachungsfeld detektiert wird, die auf die Türe zu geht.

Fig. 2 zeigt die Türe der Fig. 1 in Draufsicht.

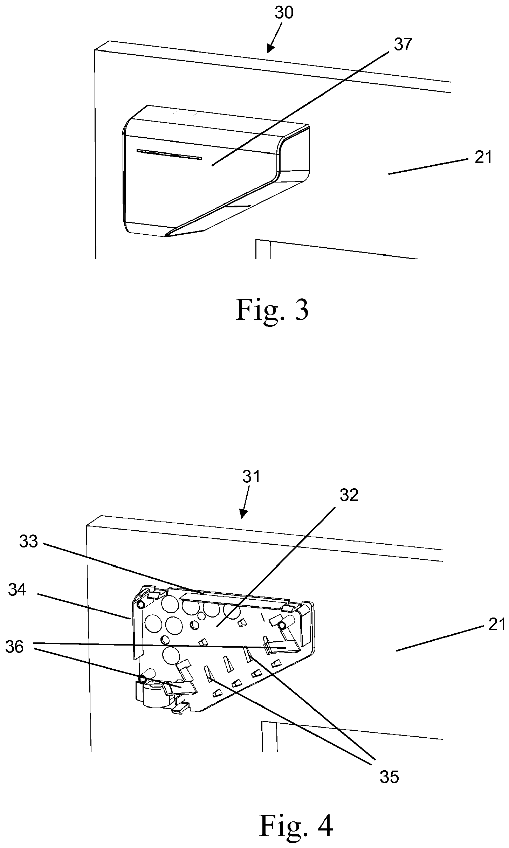

Fig. 3 zeigt den Türsensor 30 mit Gehäuse 37 am Türblatt 21 als Detail aus Fig. 1.

Fig. 4 zeigt eine Montageplatte 31 des Türsensors als Detail aus Fig. 3. Die Montageplatte 31 weist eine Ebene 32 zur flächenparallelen Montage am Türblatt 21 auf, eine waagrechte Kante 33 zur Ausrichtung parallel zur Oberkante des Türblatts und eine senkrechte Kante 34 zur Ausrichtung parallel zur Seitenkante des Türblatts. Die Montageplatte weist Stützelemente 35 auf zur definierten Winkelausrichtung des Türsensors in Bezug auf die Ebene des Türblatts. Die Montageplatte weist Halteelemente 36 auf, zur Fixierung und definierten Winkelausrichtung des Türsensors in Bezug auf die Waagrechte und Oberkante des Türblatts.

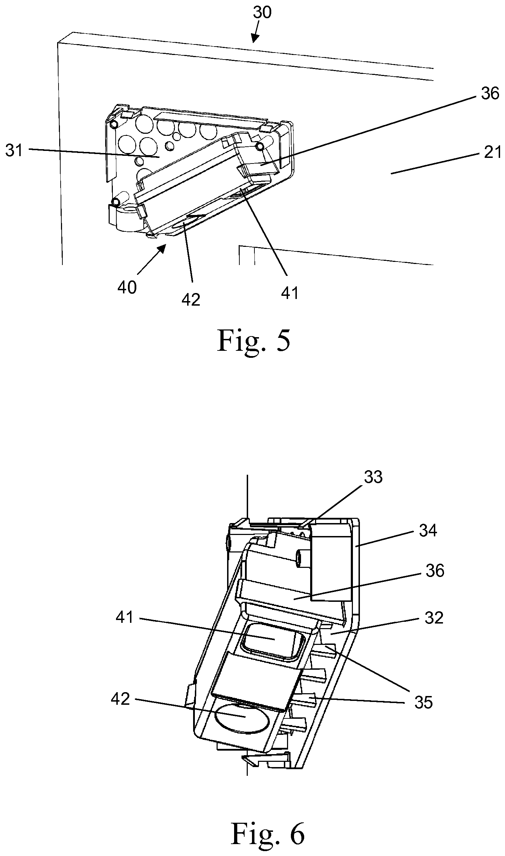

Fig. 5 zeigt den Türsensor 30 mit der Montageplatte 31 auf dem Türblatt 21 ebenfalls als Detail aus Fig. 3. Der Türsensor weist einen 3D Bildsensor 40 auf welcher einen Sender 41 und einen Empfänger 42 aufweist. Der Sender sendet mit 20 MHz modulierte IR Strahlung in den Überwachungsbereich. Der Empfänger ist ein Pixel-Matrixsensor welcher die aus dem Überwachungsbereich reflektierte Strahlung des Senders als Bild empfängt und dazu ausgebildet ist, für jeden seiner Pixel die Phasenverschiebung der Modulation der empfangenen Strahlung im Vergleich zur ausgesandten Strahlung zu detektieren. Aufgrund der Phasenverschiebung ermittelt der Empfänger für jedes seiner Pixel den Abstand der auf dieses Pixel reflektierenden Oberfläche im Überwachungsraum und generiert so ein 3D Bild. Andere Türsensoren benutzen statt der Phasenverschiebung die Flugzeit der ausgesandten und reflektieren Strahlung was im Endeffekt ähnlich ist. Diese Türsensoren werden auch TOF (Time of Flight) Sensoren genannt. Die Pixel des verwendeten Empfängers werden auch Demodulationspixel genannt.

Fig. 6 zeigt den Türsensor 30 ebenfalls als Detail aus Figur 3. Die Stützelemente 35 fixieren in Zusammenhang mit der Ebene 32 der Montageplatte die Blickrichtung und Hauptachsen des Türsensors in Bezug auf die Ebene des Türblatts. Die Halteelemente 36 fixieren in Zusammenhang mit der waagrechten Kante 33 und der senkrechten Kante 34 der Montageplatte die Blickrichtung und Hauptachsen des Türsensors in Bezug auf die Waagrechen und die Oberkante des Türblatts. Die Blickrichtung und Hauptachse des Türsensors wird durch die optischen Achsen von Sender 41 und Empfänger 42 definiert.

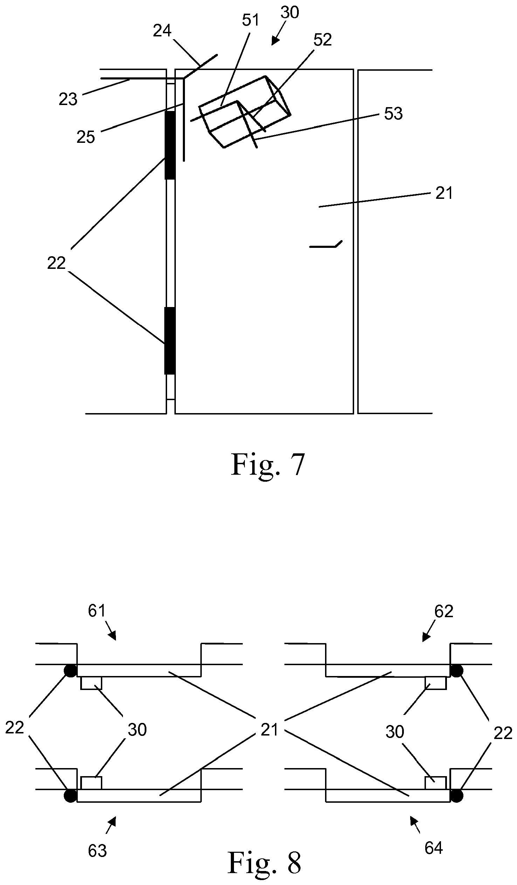

Fig. 7 zeigt die Ausrichtung des Türsensors 30 in Bezug auf das Türblatt 21 als Detail der vorhergehenden Figuren.

Das Koordinatensystem des Türblatts hat seinen Nullpunkt in der Drehachse am oberen Ende des Türblatts. Die X-Achse 23 des Türblatts verläuft waagrecht in Richtung des Scharniers 22, die Y-Achse 24 des Türblatts verläuft lotrecht zur Ebene des Türblatts zur Türaussenseite, also vom Betrachter weg und die Z-Achse 25 des Türblatts verläuft senkrecht nach unten.

Das Koordinatensystem des Türsensors hat seinen Nullpunkt im Türsensor. Die X-Achse 51 des Türsensors ist im Vergleich zur X-Achse des Türblatts um 30° um die Y-Achse des Türblatts nach unten gedreht. Die Z-Achse 53 des Türsensors ist im Vergleich zur Ebene des Türblatts um 15° um die X-Achse des Türsensors nach vorn zum Betrachter hingedreht. Die Y-Achse 52 des Türsensors ergibt sich entsprechend und zeigt vom Betrachter weg. Die Hauptblickrichtung des Türsensors geht also schräg nach unten und ist um 30° aus der Senkrechten zur Aussenkante des Türblatts und um 15° aus der Ebene des Türblatts nach vorn geschwenkt.

Der Türsensor weist einen 3-Achsen Gyrosensor als Drehwinkelgeber auf und ist in den Figuren nicht dargestellt. Der Gyrosensor ist gemäss dem Koordinatensystem des Türsensors orientiert.

Fig. 8 zeigt die vier Montagesituationen des Türsensors 30 an einem Türblatt 30. Die Montagesituation 61 entspricht den vorhergehenden Figuren. Die Montagesituationen 62, 63 und 64 entsprechen nicht den vorhergehenden Figuren.

Die Montagesituationen 61 und 62 zeigen den Türsensor 30 auf der Türinnenseite des Türblatts 21, während die Montagesituationen 63 und 64 den Türsensor 30 auf der Türaussenseite des Türblatts 21 zeigen. Die Montagesituationen 61 und 63 zeigen den Türsensor 30 an einer linksdrehenden Türe, da die Scharniere 22 auf der linken Seite der Türinnenseite angeordnet sind. Die Montagesituationen 62 und 64 zeigen den Türsensor 30 an einer rechtsdrehenden Türe, da die Scharniere 22 auf der rechten Seite der Türinnenseite angeordnet sind.

Es gibt also vier unterschiedliche Montagesituationen die durch die Kombination aus den beiden möglichen Türseiten (Türinnenseite oder Türaussenseite) und den beiden möglichen Drehrichtungen des Türblatts (rechtsdrehend oder linksdrehend) gegeben sind. Dies sind im Einzelnen:

| | | |
|---|---|---|
| Montagesituation 61: | auf Türaussenseite | einer linksdrehende Türe |
| Montagesituation 62: | auf Türaussenseite | einer rechtsdrehenden Türe |
| Montagesituation 63: | auf Türinnenseite | einer linksdrehende Türe |
| Montagesituation 64: | auf Türinnenseite | einer rechtsdrehenden Türe |

In einem Lernmodus detektiert der Drehwinkelsensor beim Öffnen der Türe eine Drehung um alle 3 Achsen. Daraus ermittelt der Türsensor die Drehrichtung um jede seiner Achsen. Aus der Drehrichtung der 3 Achsen ermittelt der Türsensor nun eindeutig die zutreffende Montagesituation anhand der folgenden Tabelle. Eine positive Drehrichtung im mathematischen Sinn ist hier mit "+" angegeben.

| Drehrichtung X-Achse | Drehrichtung Y-Achse | Drehrichtung Z-Achse | Montagesituation |
|---|---|---|---|
| + | + | + | 61 |
| - | + | - | 62 |
| + | - | + | 63 |
| - | - | - | 64 |

Aus der Tabelle ist ersichtlich, dass die Detektion von nur 2 Achsen ausreichen würde, wenn dies die Achsen X und Y oder Y und Z sind, da auch allein mit diesen Achsen eine eindeutige Zuordnung der Montagesituation möglich ist. Insofern ist es ausreichend, für den Türsensor einen 2-Achsen Drehwinkelgeber zu verwenden.

Ebenso soll angemerkt werden, dass es ausreichend ist, das Koordinatensystem des Drehwinkelgebers lediglich um eine Achse gegenüber dem Türblatt zu verdrehen. Es ist also ausreichend die Z-Achse 53 des Drehwinkelgebers im Vergleich zur Ebene des Türblatts um 15° um die X-Achse des Türsensors nach vorn zum Betrachter hin zu verdrehen. Die X-Achse des Drehwinkelgebers kann also parallel zur X-Achse des Türblatts verbleiben.

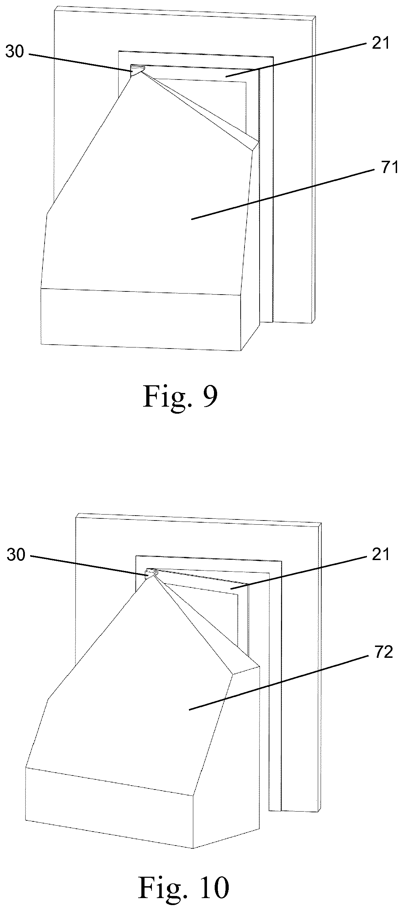

Fig. 9 zeigt das Überwachungsfeld 71 des Türsensors 30 mit geschlossenem Türblatt 21. Das Überwachungsfeld 71 endet an der Türaussenkante.

Fig. 10 zeigt das vergrösserte Überwachungsfeld 72 des Türsensors 30 mit leicht geöffnetem Türblatt 21 der gleichen Türe der Fig. 9. Das Überwachungsfeld 72 reicht nun über die Türaussenkante hinaus. Der Türsensor 30 der Fig. 9 und der Fig. 10 ist also dazu ausgebildet, das Überwachungsfeld in Abhängigkeit des Drehwinkels zu verändern und hier mit zunehmendem Drehwinkel zu vergrössern.

Der Türsensor kann dazu ausgelegt sein, dass die maximale Vergrösserung etwa bei 45° Drehwinkel des Türblatts erreicht ist, sodass das Überwachungsfeld bei geschlossener oder um 90° oder vollständig geöffnetem Türblatt wieder zum Ende der Türaussenkante reduziert ist.

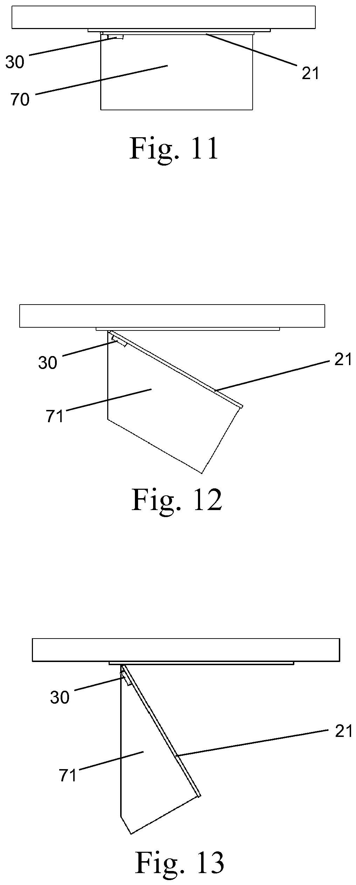

Fig. 11, Fig. 12 und Fig. 13 zeigten jeweils eine Türe mit einem Türblatt 21 mit einem Türsensor 30 und dem Überwachungsfeld 70, 71 bei verschiedenen Drehwinkeln des Türblatts in Draufsicht.

Der Drehwinkel für das Türblatt der Türe nach Fig. 11, Fig. 12 und Fig. 13 ist auf eine radiale Begrenzungslinie bei 90° begrenzt, etwa durch einen Bodenanschlag, durch eine senkrecht angrenzende Wand, durch eine Begrenzung der Türmechanik oder durch eine Begrenzung durch die Türsteuerung des motorischen Türantriebs.

Das Türblatt 11 der Fig. 11 ist geschlossen und das Überwachungsfeld 70 erstreckt sich als Rechteck an das Türblatt angrenzend in der Breite des Türblatts senkrecht in den Raum vor dem Türblatt.

Das Türblatt 11 der Fig. 12 ist um 30° und der Fig. 13 um 60° geöffnet und das Überwachungsfeld 71 erstreckt sich als Rechteck an das Türblatt angrenzend in der Breite des Türblatts senkrecht in den Raum vor dem Türblatt, wobei das Überwachungsfeld 71 auf der Seite des Scharniers der Türe so vermindert ist, dass das Überwachungsfeld nicht über die radiale Begrenzungslinie der maximalen Bewegung des Türblatts hinausreicht.

Der Türsensor ist also dazu ausgelegt, die Ausdehnung des Überwachungsfeldes in Abhängigkeit des Drehwinkels des Türblatts so zu ändern, dass das Überwachungsfeld von der Ebene des Türblatts bei maximalem Öffnungswinkel stets abgeschnitten ist und also nicht über diese Ebene hinausreicht. Dadurch kann etwa auch ein Ausblenden einer Wand erreicht werden, damit die Wand bei der Annäherung des Türsensors nicht als Hindernis-Objekt detektiert wird.

### Bezugszeichenliste:

- 10: Wand
- 11: Türöffnung

- 20: Tür
- 21: Türblatt
- 22: Türscharnier
- 23: X-Achse des Türblatts
- 24: Y-Achse des Türblatts
- 25: Z-Achse des Türblatts

- 30: Türsensor
- 31: Montageplatte
- 32: Ebene der Montageplatte
- 33: Waagrechte Kante der Montageplatte
- 34: Senkrechte Kante der Montageplatte
- 35: Stützelemente
- 36: Halteelemente
- 37: Gehäuse

- 40: 3D Bildsensor
- 41: Sender
- 42: Empfänger

- 50: 3-Achsen Gyrosensor
- 51: X-Achse des Gyrosensors
- 52: Y-Achse des Gyrosensors
- 53: Z-Achse des Gyrosensors

- 61: 1. Fall der Anordnung
- 62: 2. Fall der Anordnung
- 63: 3. Fall der Anordnung
- 64: 4. Fall der Anordnung

- 70: Überwachungsfeld
- 71: reduziertes Überwachungsfeld
- 72: vergrössertes Überwachungsfeld

## Patentansprüche

1. Tür (20), insbesondere eine Schwenk- oder Drehtü,
- mit einem Türblatt (21), und
- mit einem Türsensor (30), zur Montage auf dem Türblatt (21) in einer der folgenden vier Montagesituationen:
• auf Türaußenseite bei linksdrehender Tür,
• auf Türinnenseite bei linksdrehender Tür,
• auf Türaußenseite bei rechtsdrehender Tür oder
• auf Türinnenseite bei rechtsdrehender Tür wobei der Türsensor (30) auf dem Türblatt der Tür angebracht ist, wobei der Türsensor (30)
• einen 3D Bildsensor (40)
- zur Überwachung eines Überwachungsfeldes (70, 71, 72) vor dem Türblatt
• einen mindestens 2-Achsen Drehwinkelgeber
- zur Detektion des Drehwinkels des Türblatts und
• einen gemeinsamen Träger (31) aufweist
- welcher den 3D Bildsensor mit dem Drehwinkelgeber verbindet, wobei
- der gemeinsame Träger eine Montageebene (32) zur Montage am Türblatt definiert und die Achsen des Drehwinkelgebers in Bezug auf die Montageebene geneigt angeordnet sind und insbesondere um 15° geneigt angeordnet sind und/oder
- der gemeinsame Träger eine Kante (33, 34) oder Markierung zur waagrechten und/oder senkrechten Ausrichtung des Trägers am Türblatt umfasst, und die Achsen des Drehwinkelgebers in Bezug auf die Kante oder Markierung geneigt angeordnet sind und insbesondere um 30° geneigt angeordnet sind,
**dadurch gekennzeichnet, dass**
der Türsensor (30) dazu geeignet ist, eine Drehung um die Achsen des Drehwinkelgebers zu detektieren, und aufgrund der Drehungen um die Achsen des Drehwinkelgebers die Drehrichtungen um die Achsen des Drehwinkelgebers zu ermitteln, und aus den Drehrichtungen die zutreffende Montagesituation des Türsensors (30) an der Tür zu ermitteln.

2. Tür nach Anspruch 1, **dadurch gekennzeichnet**
- **dass** der Drehwinkelgeber ein Gyrosensor ist

3. Tür nach einem der vorgenannten Ansprüche, **dadurch gekennzeichnet,**
- **dass** der gemeinsame Träger eine Montageplatte (31) zur positionsstabilen Aufnahme des 3D Bildsensors und des Drehwinkelgebers aufweist
• welche eine Ebene zur Montage am Türblatt aufweist und/oder
• welche eine Kante oder eine Markierung umfasst, die dazu vorgesehen ist, in waagrechter und/oder senkrechter Ausrichtung auf dem Türblatt angeordnet zu werden,
• wobei die Achsen des Drehwinkelgebers in Bezug auf zwei senkrechte Achsen in der Montageebene, insbesondere die Hauptachsen des Türblatts 1-fach oder 2-fach geneigt angeordnet ist.

4. Tür nach einem der vorgenannten Ansprüche, **dadurch gekennzeichnet,**
- **dass** der Türsensor eine vorbestimmte Seite zur Montage in Richtung des Türblatts aufweist.

5. Tür nach einem der vorgenannten Ansprüche, **dadurch gekennzeichnet,**
- **dass** der Drehwinkelgeber ein 3-Achsen Drehwinkelgeber ist,
- insbesondere, dass der Drehwinkelgeber ein 3-Achsen Gyrosensor ist.

6. Tür nach einem der vorgenannten Ansprüche, **dadurch gekennzeichnet,**
- **dass** der Türsensor einen Speicher zur Speicherung von Umgebungsparametern aufweist.

7. Tür nach einem der vorgenannten Ansprüche, **dadurch gekennzeichnet,**
- **dass** der Türsensor oben auf dem Türblatt und/oder
- auf der Seite der Drehachse des Türblatts (21) angebracht ist.

## Claims

1. Door (20), in particular a swing or revolving door,
- having a door leaf (21), and
- having a door sensor (30) for installation on the door leaf (21) in one of the following four installation situations:
• on the outside of the door in the case of a left-rotating door,
• on the inside of the door in the case of a left-rotating door,
• on the outside of the door in the case of a right-rotating door, or
• on the inside of the door in the case of a right-rotating door,
wherein the door sensor (30) is fitted on the door leaf of the door, wherein the door sensor (30) has
• a 3D image sensor (40)
- for monitoring a monitoring field (70, 71, 72) in front of the door leaf,
• an at least 2-axis rotation angle encoder
- for detecting the rotation angle of the door leaf, and
• a common support (31)
- that connects the 3D image sensor to the rotation angle encoder,
wherein
- the common support defines an installation plane (32) for installation on the door leaf, and the axes of the rotation angle encoder are arranged with an inclination in relation to the installation plane and are in particular arranged with an inclination of 15° and/or
- the common support comprises an edge (33, 34) or marker for horizontally and/or vertically orienting the support on the door leaf, and the axes of the rotation angle encoder are arranged with an inclination in relation to the edge or marking and are in particular arranged with an inclination of 30°,
**characterized in that**
the door sensor (30) is suitable for detecting a rotation around the axes of the rotation angle encoder and for ascertaining, from the rotations around the axes of the rotation angle encoder, the directions of rotation around the axes of the rotation angle encoder, and for ascertaining, from the directions of rotation, the relevant installation situation of the door sensor (30) on the door.

2. Door according to Claim 1, **characterized**
- **in that** the rotation angle encoder is a gyro sensor.

3. Door according to either of the preceding claims, **characterized**
- **in that** the common support has a mounting plate (31) for holding the 3D image sensor and the rotation angle encoder in a stable position,
• which mounting plate has a plane for installation on the door leaf and/or
• which mounting plate comprises an edge or a marker intended to be arranged on the door leaf in a horizontal and/or vertical orientation,
• wherein the axes of the rotation angle encoder are arranged with a 1-axis or 2-axis inclination in relation to two vertical axes in the installation plane, in particular the main axes of the door leaf.

4. Door according to one of the preceding claims, **characterized**
- **in that** the door sensor has a predetermined side for installation in the direction of the door leaf.

5. Door according to one of the preceding claims, **characterized**
- **in that** the rotation angle encoder is a 3-axis rotation angle encoder,
- in particular in that the rotation angle encoder is a 3-axis gyro sensor.

6. Door according to one of the preceding claims, **characterized**
- **in that** the door sensor has a memory for storing ambient parameters.

7. Door according to one of the preceding claims, **characterized**
- **in that** the door sensor is fitted at the top on the door leaf and/or
- on the side of the axis of rotation of the door leaf (21).

## Revendications

1. Porte (20), en particulier porte pivotante ou porte tournante,
- comprenant un vantail de porte (21), et
- comprenant un capteur de porte (30) destiné au montage sur le vantail de porte (21) dans l'une des quatre situations de montage suivantes :
• sur la face extérieure de porte dans le cas d'une porte tournant à gauche,
• sur la face intérieure de porte dans le cas d'une porte tournant à gauche,
• sur la face extérieure de porte dans le cas d'une porte tournant à droite, ou
• sur la face intérieure de porte dans le cas d'une porte tournant à droite,
le capteur de porte (30) étant fixé sur le vantail de porte de la porte, le capteur de porte (30) présentant
• un capteur d'images 3D (40)
- pour surveiller un champ de surveillance (70, 71, 72) devant le vantail de porte,
• un capteur d'angle de rotation à au moins 2 axes
- pour détecter l'angle de rotation du vantail de porte, et
• un support commun (31)
- qui relie le capteur d'images 3D au capteur d'angle de rotation,
dans lequel
- le support commun définit un plan de montage (32) pour le montage sur le vantail de porte, et les axes du capteur d'angle de rotation sont disposés de manière inclinée par rapport au plan de montage, et sont en particulier disposés de manière inclinée de 15°, et/ou
- le support commun comprend un bord (33, 34) ou un repère pour l'alignement horizontal et/ou vertical du support sur le vantail de porte, et les axes du capteur d'angle de rotation sont disposés de manière inclinée par rapport au bord ou au repère et sont en particulier disposés de manière inclinée de 30°,
**caractérisée en ce que** le capteur de porte (30) est adapté pour détecter une rotation autour des axes du capteur d'angle de rotation, et pour déterminer sur la base des rotations autour des axes du capteur d'angle de rotation les directions de rotation autour des axes du capteur d'angle de rotation, et pour déterminer à partir des directions de rotation la situation de montage concernée du capteur de porte (30) sur la porte.

2. Porte selon la revendication 1, **caractérisée**
- **en ce que** le capteur d'angle de rotation est un capteur gyroscopique.

3. Porte selon l'une quelconque des revendications précédentes, **caractérisée**
- **en ce que** le support commun présente une plaque de montage (31) pour le logement à position stable du capteur d'images 3D et du capteur d'angle de rotation
• qui présente un plan pour le montage sur le vantail de porte, et/ou
• qui comprend un bord ou un repère qui est prévu pour être disposé en alignement horizontal et/ou vertical sur le vantail de porte,
• les axes du capteur d'angle de rotation étant disposés de manière simplement ou doublement inclinée par rapport aux deux axes verticaux dans le plan de montage, en particulier aux axes principaux du vantail de porte.

4. Porte selon l'une quelconque des revendications précédentes, **caractérisée**
- **en ce que** le capteur de porte présente un côté prédéterminé pour le montage en direction du vantail de porte.

5. Porte selon l'une quelconque des revendications précédentes, **caractérisée**
- **en ce que** le capteur d'angle de rotation est un capteur d'angle de rotation à 3 axes,
- en particulier en ce que le capteur d'angle de rotation est un capteur gyroscopique à 3 axes.

6. Porte selon l'une quelconque des revendications précédentes, **caractérisée**
- **en ce que** le capteur de porte présente une mémoire pour mémoriser des paramètres environnementaux.

7. Porte selon l'une quelconque des revendications précédentes, **caractérisée**
- **en ce que** le capteur de porte est fixé en haut sur le vantail de porte, et/ou
- sur le côté de l'axe de rotation du vantail de porte (21).
